# EUROPÄISCHE PATENTSCHRIFT

(11) **EP 3 455 015 B1**
(45) Veröffentlichungstag und Bekanntmachung des Hinweises auf die Patenterteilung: **24.06.2020**
(21) Anmeldenummer: 17723011.7
(22) Anmeldetag: 12.05.2017
(51) Int. Cl.: B22F 3/105, B29C 67/00, G01H 5/00, G01N 1/38

(54) **VERFAHREN ZUM GENERATIVEN FERTIGEN UND KODIEREN EINES DREIDIMENSIONALEN BAUTEILS**
METHOD FOR GENERATIVELY PRODUCING AND CODING A THREE-DIMENSIONAL COMPONENT
PROCÉDÉ NOTAMMENT D'IMPRESSION 3D ET CODAGE D'UN ÉLÉMENT STRUCTURAL TRIDIMENSIONNEL

(30) Priorität: 13.05.2016 EP 16001090
(43) Veröffentlichungstag der Anmeldung: 20.03.2019
(73) Patentinhaber: Linde GmbH, 82049 Pullach (DE)
(72) Erfinder: SCHOLZ, Jürgen, 81379 München (DE); MIKLOS, Ernst, 85551 Kirchheim (DE); FIERET, Jim, Orpington BR6 8DT (GB); FORET, Pierre, 80796 München (DE)
(74) Vertreter: Gellner, Bernd
(86) Internationale Anmeldenummer: PCT/EP2017/025122
(87) Internationale Veröffentlichungsnummer: WO 2017/194204

(56) Entgegenhaltungen:
- WO-A1-2013/098050
- WO-A1-2015/006414
- DE-A1-102010 026 139
- JP-A- 2002 097 532
- JP-A- 2013 040 074
- US-A1- 2010 035 061
- US-A1- 2012 183 701
- US-A1- 2012 223 059
- US-A1- 2015 279 525

## Beschreibung

Die vorliegende Erfindung betrifft ein Verfahren zum generativen Fertigen und Kodieren eines dreidimensionalen Bauteils.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM), als Laser Metal Fusion (LMF) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunterliegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser basierten Verfahren. Loses Metallpulver, im Pulverbett oder über eine Düse, oder Draht wird dabei punktuell aufgeschmolzen, und erstarrt anschließend in der gewünschten Kontur. Die dafür erforderliche Energie wird durch einen Elektronenstrahl eingebracht. Das Verfahren erfolgt meistens in einer mit Inertgas gefluteten Unterdruck-Kammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Bei Verwendung einer Inertgasatmosphäre verbleibt die Zusammensetzung des aufgebrachten Ausgangsmaterials im Wesentlichen unverändert, nachdem sie mittels einer Wärmequelle aufgeschmolzen wurden. Durch die Aufschmelzung, Erstarrung und Wärmeeinflusszonen werden die metallurgischen Eigenschaften gegenüber dem ursprünglichen Material verändert.

Bei Verwendung einer Aktivgasatmosphäre können die Aktivgase chemisch mit dem Ausgangsmaterial reagieren. Daher unterscheidet sich die Zusammensetzung und die Eigenschaften des aufgebrachten Materials auch in der chemischen Zusammensetzung vom Ausgangsmaterial. Dieser Vorgang wird häufig als gasförmiges Legieren bezeichnet. Beispiele hierfür sind das Aufbringen von Titan in einer Gasatmosphäre, die Stickstoff enthält. Daraus resultiert ein Anteil von Titannitrid im aufgebrachten Material. Beim gasförmigen Legieren hängen die physikalischen Eigenschaften unter anderem von der Konzentration an Aktivgas in der Prozessatmosphäre sowie den thermischen Zyklen ab. Die Konzentration des Aktivgases kann zwischen 10ppm bis 99,999% betragen.

Demgemäß werden Inertgase vorwiegend verwendet, um eine Oxidation zu verhindern und Aktivgase werden verwendet, um auf kontrollierte Weise mit dem Ausgangsmaterial zu reagieren, um kontrollierte Strukturen des aufgebrachten Materials bezüglich der mechanischen Festigkeit, Korrosions- und Verschleißbeständigkeit, elektrische Leitfähigkeit oder Widerstand zu erzielen.

Ein generatives Fertigungsverfahren, welches das gasförmige Legieren verwendet, ist in der EP 2 028 283 B1 offenbart: Dieses Verfahren des Bildens einer Legierung umfasst die folgenden Schritte:
(a) Bereitstellen einer Wärmequelle und eines metallischen Ausgangsmaterials in einer gasförmigen Atmosphäre;
(b) Zuführen eines gasförmigen Legierungselements proximal zum metallischen Ausgangsmaterial;
(c) Konvergieren der Wärmequelle an dem metallischen Ausgangsmaterial und dem gasförmigen Legierungselement;
(d) Schmelzen des metallischen Ausgangsmaterials mit der Wärmequelle, um eine geschmolzene Ansammlung auf einem Substrat zu bilden, so dass das metallische Ausgangsmaterial mit dem gasförmigen Legierungselement legiert, um eine legierte Zusammensetzung der geschmolzenen Ansammlung zu bilden;
(e) Bewirken relativer Bewegung zwischen dem metallischen Ausgangsmaterial und dem Substrat, um die geschmolzene Ansammlung zu einer ersten Schicht des Teils zu bilden;
(f) Wiederholen der Schritte (a) bis (e), um zusätzliche Schichten auf der ersten Schicht zu bilden und Definieren einer Gestalt für das Teil;
(g) Verändern eines Gehalts des gasförmigen Legierungselements mit dem metallischen Ausgangsmaterial, während des Ausführens der Schritte (a) bis (f), um mindestens zwei Domänen mit unterschiedlichen, in der Zusammensetzung gebildeten Eigenschaften in einem einzigen kontinuierlichen Vorgang zum Bilden der genannten mindestens zwei Domänen zu bilden, so dass die genannten mindestens zwei Domänen aneinander angrenzend gebildet werden, indem eine Freisetzung des gasförmigen Legierungselements mit einer Zeitschaltung selektiv zeitgesteuert wird, um den Gehalt derselben auf kontrollierte Weise zu verändern; und
(h) Kühlen und Verfestigen der Zusammensetzung.

Aus der WO 2015/185155 A1 geht ein Material zum 3D-Drucken hervor. Dabei ist vorgesehen, dass das zum 3D-Drucken vorgesehene Material sowohl Material zum 3D-Drucken als auch einen Anteil an magnetischen Nanopartikeln umfasst. Die magnetischen Nanopartikel sind in das Material zum 3D-Drucken eingebettet. Auf diese Weise soll es möglich sein, Bauteile mit einer vorbestimmten Kodierung zu erzeugen. US2012/183701 offenbart einen Prozess zur chemischen oder physikalischen Sicherung des hergestellten 3D gegen Fälschungen durch die Einführung von Codiergas und/oder - pulver in einen Hohlraum des Objekts und schließt diesen. US201279825 offenbart den Prozess zum chemischen oder physikalischen Schutz eines 3D-Objekts vor Fälschungen durch die Einführung eines festen Etiketts, das ebenfalls radioaktiv ist. JP 2013 040074 A offenbart einen Prozess zum Label Al2O3 mit ¹⁷O durch Schmelzen von Al-Pulver in Gegenwart von ¹⁷O.

Ein übergreifendes Problem bei der Fertigung von Bauteilen und demgemäß auch beim generativen Fertigen von Bauteilen besteht darin, dass es momentan nicht möglich ist, Bauteile auf einfache und sichere Weise von Fälschungen bzw. billigen Kopien zu unterscheiden. Es ist meist schwierig festzustellen, ob ein Bauteil vom Originalhersteller (Original Equipment Manufacture (OEM)) hergestellt ist oder ob ein Bauteil eine von einem Dritten hergestellte Kopie ist, da diese sich auf Grund ihres Erscheinungsbildes kaum voneinander unterscheiden lassen. Jedoch können erhebliche qualitative Unterschiede (Festigkeit, Elastizität, Härte, Porosität, Duktilität, etc.) bestehen.

Insbesondere ist problematisch, dass es das generative Fertigen ermöglicht, Bauteile ohne aufwändige Entwicklungs- oder Produktionskosten bzw. Herstellungsverfahren in geringer Stückzahl einfach nachzubauen bzw. zu fälschen.

In der Industrie besteht der Bedarf an eindeutigen Kennzeichnungen der Bauteile, um besonders bei Schadensfällen die Haftungsfrage klären zu können.

Bestehende Möglichkeiten zum Kodieren eines Bauteils mittels Prägen oder Gravieren sind hinsichtlich der Geometrie oder der Funktionalität des Bauteils beschränkt. Beispielsweise ist das Oberflächengravieren mittels Laser wirtschaftlich nur sinnvoll, wenn dieses in den Herstellungsprozess integriert ist. Zudem erfordert es eine spezielle Positionierung des Laserstrahls hinsichtlich seines Winkels bezüglich des Bauteils. Sogenannte DNA-paintings sind leicht entfernbar. Zudem ist es bekannt, Bauteile mittels Radiofrequenzverfahren zu identifizieren. Diese Technologie ist jedoch sehr teuer und insbesondere ist es schwierig und kostspielig, diese auf einzelne Bauteile aufzubringen. Daher markieren Hersteller zumeist eine komplette Vorrichtung bzw. eine Maschine an einer einzelnen Stelle und nicht jedes einzelne Bauteil dieser Maschine. Daher schützt eine derartige Markierung einer kompletten Maschine nicht vor Fälschungen, wenn beispielsweise Ersatzteile in diese Maschine eingebaut werden.

Aufgabe der vorliegenden Erfindung ist es daher, ein einfaches, sicheres und zuverlässiges Verfahren zum generativen Fertigen und Kodieren eines dreidimensionalen Bauteils bereitzustellen. Weiterhin sollen möglichst keine zusätzlichen Arbeitsschritte erforderlich sein.

Diese Aufgabe wird durch ein Verfahren gemäß Patentanspruch 1 gelöst. Vorteilhafte Ausgestaltungen sind in den Unteransprüchen angegeben.

Die Kodierungskomponente kann auch gasförmige Legierungselemente umfassen, wobei der Anteil des gasförmigen Legierungselements vorzugsweise derart gewählt ist, dass das gasförmige Legierungselement die Materialeigenschaften des Bauteils nur unwesentlich verändert.

Die Einlagerung der gasförmigen Legierungselemente wird so groß gewählt, dass die Legierungselemente im fertigen Bauteil z.B. mittels metallurgischer und/oder chemischer und/oder Magnet Resonanz Analyseverfahren detektierbar sind.

Unter Protokollieren kann das bauteilbezogene Speichern der Daten in elektronischer Form oder das Ausdrucken der Informationen auf einem Zertifikat, z.B. auch in maschinenlesbarer Form, verstanden werden.

Mittels des erfindungsgemäßen Verfahrens ist es möglich, ein dreidimensionales Bauteil auf einfache und kostengünstige Weise sicher und zuverlässig zu kodieren.

Insbesondere ist es vorteilhaft, dass zum Kodieren des Bauteils kein zusätzlicher Fertigungsschritt notwendig ist. Das Kodieren erfolgt dadurch, dass zumindest zu einem vorbestimmten Zeitintervall während des Schmelzens des Ausgangsmaterials dem Prozessgas eine Kodierungskomponente zugesetzt wird. Ist diese gasförmige Kodierungskomponente chemisch aktiv, geht sie mit dem Metall eine Reaktion ein und das Reaktionsprodukt (z.B. ein Oxid, Nitrid, Carbid) wird in die metallische Struktur eingebettet. Aber auch Kodierungsmoleküle, die nicht reagieren (weil z.B. die lokale Temperatur zu niedrig ist), können in die kleinen Zwischenräume der körnigen Struktur eingelagert werden. Dieser Mechanismus funktioniert auch bei inerten Gasen, die in ihrem Ursprungszustand im Bauteil gefangen werden können. Findet eine nachträgliche Kompaktierung statt (heißisostatisches Pressen (HIP), Wärmebehandlung, Entgasung, etc.) kann jedoch ein inertes Gas entweichen. Die Kodierungskomponente kann im fertigen Bauteil beispielsweise mittels chemischer Analyseverfahren oder mittels eines Massenspektrometers detektiert werden. Das kann in einem Labor oder mit mobilen Geräten erfolgen.

Ein weiterer Vorteil besteht darin, dass die Produktionsparameter aufgrund des Kodierens nicht verändert oder angepasst werden müssen.

Zudem ist vorteilhaft, dass die Kodierung keinen zusätzlichen Produktionsschritt erfordert.

Das Protokollieren von Kodierungsinformationen kann bspw. das Abspeichern von Kodierungsinformationen in einer Datenbank oder auf einem Chip, etc. umfassen.

Die Kodierung kann über ein komplettes Bauteil oder nur gezielt an vorbestimmten Stellen oder Bereichen des Bauteiles eingebracht werden. Weiterhin können kodierte Bereiche durch den Schichtaufbau beim generativen Fertigen einander überlagern, aneinander angrenzen oder geometrisch voneinander getrennt sein.

Dadurch, dass die Kodierungsinformationen protokolliert und/oder in einer Datenbank abgespeichert werden, wird genau festgehalten bzw. protokolliert, welche Kodierungskomponente an welcher Stelle des Bauteiles eingebracht wurde.

Die Kodierungsinformationen können Angaben über die Art und/oder den Anteil der Kodierungskomponente und/oder über die Lage der Kodierungskomponente im Objekt und/oder über die Seriennummer des Objekts enthalten.

Aufgrund der Kodierungsinformationen lässt sich zu einem späteren Zeitpunkt auf einfach Art und Weise feststellen, nämlich indem der Bereich des Bauteils, in dem die Kodierungskomponente eingebracht wurde, untersucht wird, ob es sich um ein Originalbauteil handelt oder nicht.

Eine solche Kodierung ist nahezu fälschungssicher, da einem potenziellen Fälscher die Kodierungsinformationen nicht zur Verfügung stehen und diese von außen nicht sichtbar sind.

Somit kann anhand der Kodierungsinformationen das fertige Objekt hinsichtlich seiner Kodierungskomponente beispielsweise mittels eines chemischen Analyseverfahrens oder mittels eines Massenspektrometers detektiert werden.

Unter einem generativen Fertigen wird im Rahmen der vorliegenden Erfindung das lagen- bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Bezug genommen. Als Ausgangsmaterial können im Rahmen der vorliegenden Erfindung Materialien wie z.B. Polymere, Keramiken, Kunstharze, Kunststoffe und vorzugsweise Metalle vorgesehen sein.

Das Prozessgas kann ein inertes Gas, wie z.B. Stickstoff, Argon, Helium, Neon, Krypton, Xenon, Radon oder auch Mischungen daraus, und/oder ein Aktivgas, wie z.B. O₂, CO₂, und H₂ oder auch Mischungen daraus, umfassen.

Eine Mischung aus Prozessgas und Kodierungskomponente wird im Folgenden als Kodierungsgas bezeichnet. Als Kodierungskomponente, die mit einem entsprechenden Prozessgas vermischt oder auch in reiner Form verwendet werden kann, ist vorzugsweise Sauerstoff 18 Kohlendioxid (C¹⁸O₂), Kohlenstoff 13 Kohlendioxid (¹³CO₂), Kohlenstoff 13 Kohlenmonoxid (¹³CO), Deuterium (D₂), Stickstoff 15 (¹⁵N₂) und Sauerstoff 18 (¹⁸O₂) vorgesehen.

Die Kodierungskomponente umfasst ein oder mehrere Isotope eines Gases, vorzugsweise des Prozessgases, wobei der Anteil eines Isotops gegenüber dem natürlichen Anteil der Isotope im Gas verändert ist. Das bedeutet das Verhältnis der Isotope ist gegenüber dem natürlich vorkommenden Verhältnis verändert. Beispielsweise ist bei Stickstoff das Verhältnis von ¹⁴N (Häufigkeit = 99,634) zu ¹⁵N (Häufigkeit = 0,366) derart verändert, dass der Anteil an ¹⁵N erhöht und der Anteil an ¹⁴N verringert ist oder umgekehrt. Bei Verwendung einer kohlenstoffhaltigen Kodierungskomponente wird beispielsweise das Verhältnis von ¹²C (Häufigkeit = 98,9) zu ¹³C (Häufigkeit = 1,1) derart verändert, dass der Anteil an ¹³C erhöht und der Anteil an ¹²C verringert ist oder umgekehrt. Beispielsweise kann bei Wasserstoff das Verhältnis von ¹H (Häufigkeit = 98,9885) zu ²H (Häufigkeit = 0,0115) derart verändert werden, dass der Anteil an ²H erhöht und der Anteil an ¹H verringert ist oder umgekehrt.

Es kann bspw. vorgesehen sein, dass die Häufigkeit der Isotope gegenüber der natürlich vorkommenden Häufigkeit in etwa um oder mehr als 0,5% oder 1,0% oder 1,5% oder 2,5% oder 5,0% oder 10,0% oder 25% oder 50,0% oder 75% oder 100% oder 150% oder 200% oder 500% oder 1000% erhöht oder verringert ist.

Als Isotope sind vorzugsweise Stickstoff-15 und Stickstoff 14 und/oder Kohlenstoff 12, Kohlenstoff 13 und/oder Kohlenstoff 14 und/oder auch beispielsweise Sauerstoff-16 und/oder Sauerstoff 18 vorgesehen. Weiterhin kann auch Argon -36, -38,-39, -40 vorgesehen sein. Argon ist zwar inert und reagiert nicht mit dem Werkstoff, da aber insbesondere bei den Pulverbettverfahren keine 100% Bauteildichte erreicht wird, ist es möglich gasförmige Einschlüsse zur Kodierung vorzusehen.

Grundsätzlich denkbar ist auch die Verwendung von Wasserstoff 2 oder Wasserstoff 3 sowie Helium 3 und Helium 4 Isotopen.

Um komplexere Kodierungen vorzusehen, können auch zwei oder drei oder mehr verschiedene Isotope in der Kodierungskomponente enthalten sein. Demgemäß kann die Kodierungskomponente ein oder mehrere andere als die natürlich vorkommenden Isotope des Prozessgases umfassen. Bspw. können Sauerstoff-Isotope mit Stickstoff-Isotopen oder auch C-Isotope im CO₂ mit H-Isotopen in H₂ kombiniert werden.

Das metallurgische Ausgangsmaterial kann mittels Pulverbett oder Pulverzuführung oder Drahtzuführung bereitgestellt werden. Als Wärmequelle können ein Laserstrahl, ein Elektronenstrahl oder ein Plasma-/Lichtbogen vorgesehen sein.

Weiterhin ist eine Vorrichtung zum generativen Fertigen und Kodieren von dreidimensionalen Bauteilen offenbart. Diese Vorrichtung umfasst
vorzugsweise eine Prozesskammer,
eine Bauplattform auf der ein Ausgangsmaterial bereitstellbar ist,
eine Prozessgaszuführeinrichtung zum Zuführen eines Prozessgases,
eine Wärmequelle zum Schmelzen des Ausgangsmaterials,
und eine Kodierungskomponentezuführeinrichtung, die mit einer Steuereirichtung derart verbunden ist, dass zu zumindest einem vorbestimmten Zeitintervall während des Schmelzens dem Ausgangsmaterials eine gasförmige Kodierungskomponente oder ein eine Kodierungskomponente enthaltendes Kodierungsgas derart zugeführt wird, dass die Verwendung der Kodierungskomponente im fertigen Objekt detektierbar ist, wobei die gasförmige Kodierungskomponente vorzugsweise ein oder mehrere Isotope zumindest eines Gases umfasst und der Anteil des zumindest einen Isotops gegenüber dem natürlich vorkommenden Anteil dieses Isotops im Gas verändert ist. Zudem kann eine Datenbank zum Abspeichern von Kodierungsinformationen vorgesehen sein.

Die Vorteile der Vorrichtung entsprechen im Wesentlichen den Vorteilen des Verfahrens.

Weiterhin kann eine Mischkammer zum Beimischen der Kodierungskomponente zum Prozessgas vorgesehen sein, wobei aus der Mischkammer der Prozesskammer Prozessgas oder eine Mischung aus Prozessgas und Kodierungskomponente zuführbar ist. Demgemäß weist die Mischkammer einen ersten Einlass zum Zuführen eines Prozessgases und einen zweiten Einlass zum Zuführen einer Kodierungskomponente, bspw. Kohlen¹³C-dioxid (99%), Stickstoff¹⁵N (98%), usw., oder einen zweiten Einlass zum Zuführen eines eine Kodierungskomponente enthaltenden Prozessgases und einen Auslass der mit der Prozesskammer verbunden ist. Eine solche externe Mischkammer ist vorteilhaft, da sich bestehend Anlagen bzw. Vorrichtungen damit derart erweitern lassen, dass eine Kodierung eines Bauteils möglich ist.

Die Prozesskammer kann auch selbst zwei Einlässe aufweisen, wobei ein Einlass zum Zuführen von Prozessgas und der andere Einlass zum Zuführen einer Kodierungskomponente oder eines eine Kodierungskomponente enthaltenden Prozessgases (Premix) aus entsprechenden Vorratsbehältern vorgesehen ist Das Prozessgas ist derart ausgebildet bzw. zusammengesetzt, dass es die chemisch metallurgisch erwünschten Eigenschaften des Bauteiles gewährleisten kann und zusätzlich eine eindeutige Bauteilkennzeichnung bzw. Kodierung ermöglicht. Somit müssen bauteilbezogene Prozessgase mit entsprechender Kodierungskomponente bereitgestellt werden. Die Kodierungskomponente kann somit auch als Premix aus einem Gasvorratsbehälter bereitgestellt werden, der sowohl Prozessgas als auch einen entsprechenden Anteil an Kodierungskomponente enthält. Dieser den Premix enthaltende Gasvorratsbehälter bildet dann die Kodierungskomponentezuführeinrichtung aus.

Die Kodierungskomponentezuführeinrichtung kann somit die Mischkammer, der Premix-Vorratsbehälter oder der Vorratsbehälter enthaltend die Kodierungskomponente sein.

Die Zugabe der Kodierungskomponente kann von einer Steuereinrichtung gesteuert werden. Diese Steuereinrichtung kann eine Kodierungskomponentereglereinrichtung mit einem geschlossenen Regelkreis umfassen, die die Zugabe regelt. Die Kodierungskomponentereglereinrichtung erfasst mittels eines Sensors einen Ist-Wert eines oder mehrerer Volumenströme in der Prozesskammer und/oder der Mischkammer, vergleicht diesen mit einem vorgegebenen Sollwert eines oder mehrerer Volumenströme und über ein Stellglied wird dann der vorgegebene Sollwert eingestellt.

Unter Volumenstrom bzw. Strömen werden die Werte der entsprechenden Gasströme verstanden, die von der Kodierungskomponentezuführeinrichtung der Prozesskammer zugeführt werden.

Die Kodierungskomponente kann vorzugsweise Sauerstoff 18 Kohlendioxid (C¹⁸O₂), Kohlenstoff 13 Kohlendioxid (¹³CO₂), Kohlenstoff 13 Kohlenmonoxid (¹³CO₂), Deuterium (D₂), Stickstoff 15 (¹⁵N₂) und Sauerstoff 18 (¹⁸O₂) oder auch Mischungen daraus umfassen.

Die Häufigkeit des Isotops kann gegenüber der natürlich vorkommenden Häufigkeit in etwa um 0,5% oder um 1,0% oder um 1,5% oder um 2,5% oder um 5,0% oder um 10,0% oder um 25% oder um 50,0% oder um 75% oder um 100% oder um 150% oder um 200% oder um 500% oder um 1000% erhöht oder verringert sein.

Beispiele für konkrete Vorgaben zur Erhöhung oder Verringerung der Isotopenverhältnisse sind in der nachfolgenden Tabelle angegeben.

| Art der Kodierung | | | | | |
|---|---|---|---|---|---|
| | Element | Art des Isotops das zum Anreichern eines Basisgases verwendet wird um eine Codierung vorzusehen | Natürlich vorkommende Konzentration der Isotope | Mögliche Moleküle | Bereich der Isotopen Zudosierung zu einem Basisgas |
| Inerte Isotope, zum Einlagern in Mikroporositäten eines Bauteiles | Ar | ³⁶Ar | ³⁶Ar: 0.337% | N/A | Zwischen dem 1.1-fachen und dem 10-fachen des natürlich vorkommenden Anteil des Isotops oder kleiner gleich dem 0.9-fachen des natürlichen Anteils |
| | | | ³⁸Ar: 0.063% | | |
| | | | ⁴⁰Ar: 99.6% | | |
| | He | ³He | ³He: 0.000137% | N/A | Zwischen dem 1.1-fachen und dem 10-fachen des natürlich vorkommenden Anteil des Isotops oder kleiner gleich dem 0.9-fachen des natürlichen Anteils |
| | | | Rest: ⁴He | | |
| | H | ²H | ²H: 0.012% | ²H2 | ²H₂ : Zwischen 1 ppm und 10 ppm |
| | | | Rest ¹H | ²H¹H | ²H¹H: Zwischen dem 1.1-fachen und dem 10-fachen des natürlich vorkommenden Anteil des Isotops oder kleiner gleich dem 0.9-fachen des natürlichen Anteils |
| | | | | N₂H₃ | |
| | | | | | N₂H₃ : Zwischen 1 ppm und 10 ppm |
| | Kr | ⁷⁸Kr | ⁷⁸Kr: 0.35% | N/A | ⁷⁸Kr und ⁸²Kr: Zwischen dem 1,1 -fachen und dem 10-fachen des natürlich vorkommenden Anteil des Isotops oder kleiner gleich dem 0.9-fachen des natürlichen Anteils. |
| | | ⁸²Kr | ⁸⁰Kr: 2.25% | | |
| | | ⁸⁴Kr | ⁸²Kr: 11.6% | | |
| | | ⁸⁶Kr | ⁸³Kr: 11.5% | | |
| | | | ⁸⁴Kr: 17.3% | | Andere: Zwischen dem 1,001-fachen und dem 1,1-fachen des natürlich vorkommenden Anteil des Isotops oder kleiner gleich dem 0.99-fachen des natürlichen Anteils |
| | | | ⁸⁶Kr: 17.3% | | |
| | Ne | ²⁰Ne²¹Ne²²Ne | ²⁰Ne: 90.48% | N/A | ²¹Ne und ²²Ne: Zwischen dem 1,001-fachen und dem 1,1-fachen des natürlich vorkommenden Anteil des Isotops oder kleiner gleich dem 0.99-fachen des natürlichen Anteils |
| | | | ²¹Ne: 0.27% | | |
| | | | ²²Ne: 9.25% | | |
| | Xe | ¹²⁴Xe | ¹²⁴Xe: 0.095% | N/A | ¹²⁴Xe, ¹²⁹Xe: Zwischen dem 1,1-fachen und dem 10-fachen des natürlich vorkommenden Anteil des Isotops oder kleiner gleich dem 0.9-fachen des natürlichen Anteils. |
| | | ¹²⁹Xe | ¹²⁶Xe: 0.089% | | |
| | | ¹³¹Xe | ¹²⁸Xe: 1.91% | | |
| | | ¹³²Xe | ¹²⁹Xe: 26.4% | | |
| | | ¹³⁴Xe | ¹³⁰Xe: 4.07% | | Andere: Zwischen dem 1,001-fachen und dem 1,1-fachen des natürlich vorkommenden Anteil des Isotops oder kleiner gleich dem 0.99-fachen des natürlichen Anteils |
| | | ¹³⁶Xe | ¹³¹Xe: 21.2% | | |
| | | | ¹³²Xe: 26.9% | | |
| | | | ¹³⁴Xe: 10.4% | | |
| | | | ¹³⁶Xe: 8.86% | | |

Die Kodierungskomponente kann mindestens ein Isotop eines Aktivgases enthalten, das mit dem Werkstoff des herzustellenden Bauteils derart reagiert, dass es im Bauteil verbleibt.

Die Kodierungskomponente kann zumindest ein Isotop eines inerten Gases umfassen, wobei sich das Isotop in das Bauteil einlagert.

Die Kodierungskomponente kann mehrere unterschiedliche Isotope (Isotope verschiedener Gase) in vorbestimmten Verhältnissen enthalten, wobei die verschiedenen Isotope im Bauteil die Kodierung ausbilden.

Die Isotope können Isotope des Gases sein, das die Hauptkomponente des Prozessgases ausbildet.

Die Isotope können auch Isotope sein, die im Prozessgas nicht vorkommen.

Stickstoff ¹⁵N-Isotope können sich abhängig vom Legierungselement, der Temperatur, der Konzentration und/oder der Reaktionszeit manchmal inert und manchmal reaktiv verhalten.

Wasserstoff-Isotope können auch im gasförmigen Zustand in Mikroporositäten eingelagert sein, mit atomaren Sauerstoff reagieren und sich auflösen, oder sie können metallische Hydride mittels Adsorption auf metallischen Oberflächen ausbilden und im Bauteil verbleiben.

Kohlenstoff-Isotope ¹²C und ¹³C werden in Form von Kohlendioxid bereitgestellt, welches dann im Verfahren abgetrennt wird.

Einige Isotope von H, N, CO können dem Verfahren als Teil einer chemischen Verbindung wie z. B: C¹⁸O₂, ¹³CO₂, N₂H₃ und ¹⁵NH₃ zugesetzt sein.

Ein solches Kodierungsgas wird zum Kodieren von Bauteilen gemäß dem vorstehend beschriebenen Verfahren eingesetzt.

Heutige Anlagen sind nicht zwangsweise für Aktivgasgemische mit O₂ oder CO₂ geeignet, könnten aber so betrieben werden, wenn dies aus metallurgischer Sicht sinnvoll ist. Generative Verfahren, die außerhalb einer Kammer erfolgen (Laser Metal Deposition, Wire Arc Additive Manufcturing, Plasma -Pulver oder Drahtbasierte Lichtbogenverfahren) sind einschränkungsfrei mit Gasen betreibbbar.

Der Grund, dass heutige Prozesskammern nicht für die Verwendung von reaktiven Gasen vorgesehen sind, liegt darin, dass es bisher nicht versucht wurde. Bekannte Technologien verwenden zumeist Inertgas, um metallurgisches Verhalten ohne zusätzliche chemische Reaktion untersuchen zu können. Jedoch können Prozesskammern für LMF (SLM) auf einfache Weise an Aktivgasmischungen angepasst werden.

Ausführungsformen der generativen Fertigung außerhalb von Prozesskammern sind im Hinblick auf die Gasmischungen wesentlich flexibler. Sogar die Verwendung von zwei oder drei verschiedenen Gaszuführungen zum Prozessbereich ist dann möglich. Der große Unterschied im Vergleich zu Prozesskammern ist das Ansprechverhalten auf veränderte Gaszusammensetzungen. Während es in der Prozesskammer nicht so einfach ist, die Einlagerung der Isotope auf einen bestimmten Bereich eines Bauteils zu begrenzen, ist es im offenen Verfahren, wie dem Lichtbogen oder Plasma der Isotope, leichter möglich, die Isotope genau anzuordnen und sogar innerhalb eines Bauteils öfter zu variieren. Daher ist erfindungsgemäß auch ein Fertigen außerhalb einer Prozesskammer ohne Prozessgas vorgesehen. Bei derartigen Verfahren muss dann das Kodierungsgas separat zugeführt werden, wenn der Prozess an Umgebungsluft stattfindet.

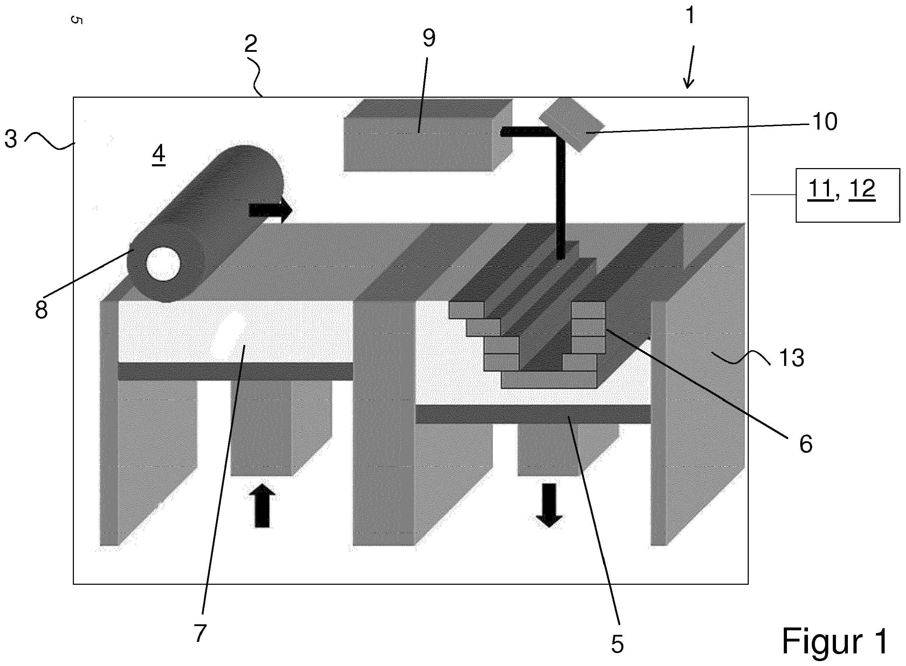

Die Erfindung wird im Folgenden an Hand einer Figur näher erläutert. Diese zeigt in Figur 1 eine schematische Darstellung einer Vorrichtung. (nicht die Erfinderung) Im Folgenden wird eine Vorrichtung 1 zum generativen Fertigen und Kodieren eines dreidimensionalen Bauteils beschrieben. Grundsätzlich ist, wie bereits vorstehend erwähnt, nahezu jede Vorrichtung 1 zum generativen Fertigen von dreidimensionalen Bauteilen zum Ausführen des erfindungsgemäßen Verfahrens geeignet.

Die Erfindung wird in allgemeiner Form beispielhaft an Hand eine Laser-Schmelz-Vorrichtung 1 mit Pulverbett erläutert (Figur 1).

Die Laser-Schmelz-Vorrichtung umfasst eine Prozesskammer 2, die durch eine Kammerwandung 3 nach außen hin abgeschlossen ist und einen Prozessraum 4 begrenzt. Die Prozesskammer 2 dient als Bauraum für das dreidimensionale Bauteil.

In der Prozesskammer 2 ist ein nach oben offener Behälter 13 angeordnet. In dem Behälter 13 ist eine Bauplattform 5 zur Aufnahme des zu fertigenden Bauteils 6 angeordnet. Die Bauplattform 5 weist eine Höhenverstelleinrichtung auf, mittels der die Bauplattform 5 in vertikaler Richtung derart einstellbar ist, dass eine Oberfläche einer neu zu verfestigenden Schicht in einer Arbeitsebene angeordnet ist.

Weiterhin umfasst die Vorrichtung 1 einen Vorratsbehälter 7. Der Vorratsbehälter 7 ist zur Aufnahme eines verfestigbaren pulverförmigen Ausgangsmaterials ausgebildet.

Weiterhin ist eine Auftrageinrichtung 8 zum Aufbringen des Ausgangsmaterials auf die Bauplattform 5 vorgesehen. Eine solche Auftrageinrichtung 8 ist in horizontaler Richtung parallel zu der Arbeitsebene beweglich.

Zudem ist ein Laser 9 zum Erzeugen eines Laserstrahls bzw. eine Wärmequelle vorgesehen. Ein von dem Laser 9 erzeugter Laserstrahl wird über eine Umlenkeinrichtung 10 umgelenkt und durch eine Fokussiereinrichtung (nicht dargestellt) auf einen vorbestimmten Punkt unmittelbar unterhalb der Arbeitsebene fokussiert. Mittels der Umlenkeinrichtung 10 kann der Verlauf des Laserstrahls derart verändert werden, dass er die dem Querschnitt des herzustellenden Objekts entsprechenden Stellen der aufgetragenen Schicht aufschmilzt.

Zudem ist eine Prozessgaszuführeinrichtung 11 vorgesehen, mittels der die Prozesskammer 2 mit einem Prozessgas beaufschlagbar ist.

Die Prozessgaszuführeinrichtung 11 weist einen Vorratsbehälter 7 für das Prozessgas auf, wobei der Prozessgasvorratsbehälter (nicht dargestellt) über einen Leitungsabschnitt mit der Prozesskammer 2 verbunden ist.

Weiterhin ist eine Kodierungskomponentezuführeinrichtung 12 vorgesehen, mittels der die Prozesskammer 2 mit einer Kodierungskomponente beaufschlagbar ist.

Die Kodierungskomponentezuführeinrichtung weist einen Vorratsbehälter 7 (nicht dargestellt) für die Kodierungskomponente auf. Dieser ist über einen Leitungsabschnitt mit der Prozesskammer 2 verbunden.

Alternativ kann eine Mischkammer (nicht dargestellt) vorgesehen sein. Die Mischkammer weist einen Einlass zum Zuführen von Prozessgas aus dem Vorratsbehälter 7 für Prozessgas und einen Einlass zum Zuführen von Kodierungskomponente aus dem Vorratsbehälter 7 für die Kodierungskomponente auf.

Das Prozessgas und die Kodierungskomponente können auch als Vorgemisch (Premix) aus einem Gasvorratsbehälter (nicht dargestellt) bereitgestellt werden, der sowohl Prozessgas als auch einen entsprechenden Anteil an Kodierungskomponente enthält. Dieser den Premix enthaltende Gasvorratsbehälter bildet dann die Kodierungskomponentezuführeinrichtung aus und ist mit der Prozesskammer 2 direkt zusätzlich zu dem Vorratsbehälter 7 für das Prozessgas verbunden oder mit der Mischkammer verbunden.

Weiterhin ist eine Steuereinrichtung (nicht dargestellt) zum Steuern der Zugabe der Kodierungskomponente vorgesehen. Die Steuereinrichtung umfasst eine Kodierungskomponentereglereinrichtung mit einem geschlossenen Regelkreis, die die Zugabe regelt. Die Kodierungskomponentereglereinrichtung kann einen P-Regler, einen I-Regler, einen D-Regler und Kombinationen daraus, wie z.B. einen PID-Regler umfassen. Die Kodierungskomponentereglereinrichtung erfasst mittels eines Sensors ein Ist-Wert der einen oder mehrere Volumenströme in der Prozesskammer 2 und/oder der Mischkammer, vergleicht diesen mit einem vorgegebenen Sollwert eines oder mehrerer Volumenströme vergleicht und über ein Stellglied wird dann der vorgegebene Sollwert eingestellt.

Im Folgenden wird ein erfindungsgemäßes Verfahren anhand eines Ausführungsbeispiels beschrieben.

Dabei wird im ersten Schritt ein metallisches Ausgangsmaterial auf der Bauplattform 5 in Form eines Pulverbetts mittels der Beschichtungseinrichtung aufgebracht bzw. bereitgestellt. Alternativ kann das metallische Ausgangsmaterial auch mittels einer Pulverzuführung oder einer Drahtzuführung zugeführt werden.

Anschließend wird in einem zweiten Schritt der Prozesskammer 2 mittels der Prozessgaszuführeinrichtung 11 als Prozessgas ein inertes Schutzgas, wie z. B. Stickstoff, zugeführt.

In einem nächsten Schritt wird das Ausgangsmaterial mittels des Lasers 9 aufgeschmolzen.

Da das aufgeschmolzene Volumen bei fast allen generativen Verfahren in der Regel ziemlich klein ist, erfolgt die Abkühlung der Schicht während der Laser Material an anderer Stelle aufschmilzt oder auch wenn eine neue Pulverschicht aufgetragen wird.

Zudem kann bei bestimmten Prozessen ein Stabilisierungsschritt vorgesehen sein, in dem die Schicht abgekühlt und verfestigt wird.

Diese Schritte werden wiederholt.

Entweder kontinuierlich oder zu einem vorbestimmten Zeitpunkt wird der Prozesskammer dann die Kodierungskomponente zugeführt. In der Regel befindet sich in der Prozesskammer permanent Prozessgas. Der Aufbauprozess startet in der Regel erst wenn die Anforderungen an O₂ und H₂O Gehalt erfüllt sind. Ist das Prozessgas Stickstoff oder ein Stickstoff-haltiges Gemisch (gleiches für Argon), dann ist im das Prozessgas eine Kodierungskomponente derart enthalten, dass der Anteil an Stickstoff-15 und Stickstoff-14 Isotopen gegenüber dem natürlichen Anteil an Stickstoff-15 und Stickstoff-14 Isotopen bzw. deren Verhältnis verändert ist. Beispielsweise bei Stickstoff ist das Verhältnis von ¹⁵N (Häufigkeit = 99,634) zu ¹⁵N (Häufigkeit = 0,366) derart verändert, dass der Anteil an ¹⁵N erhöht und der Anteil an ¹⁴N verringert ist (oder umgekehrt).

Durch die Kodierungskomponente erhält dieser Bereich des Bauteils eine einzigartige Isotopen-Signatur.

Bei weiteren Schichten des Bauteils kann wieder das ursprüngliche Prozessgas verwendet werden, welches keine Kodierungskomponente enthält.

Das Kodieren des Bauteils mit einer Kodierungskomponente kann wiederholt werden, so dass unterschiedliche Schichten bzw. Bereiche am Bauteil kodiert sind. Zum Kodieren von Bereichen muss der Herstellungsprozess einer Schicht abgebrochen, die Atmosphäre in der Prozesskammer verändert bzw. die Prozessgaszusammensetzung verändert und die restliche Schicht hergestellt werden. Dieser Schritt muss entsprechend bei darauffolgenden Schichten wiederholt werden, so dass dann ein Bereich des Bauteils kodiert ist.

Hierbei kann jeweils die gleiche Kodierungskomponente oder es können auch unterschiedliche Kodierungskomponenten verwendet werden.

Die Kodierungsinformationen werden in einer Datenbank abgespeichert.

Alle zur Fertigung des dreidimensionalen Bauteils notwendigen Parameter sind ebenfalls elektronisch gespeichert.

Die Kodierungskomponentenzuführeinrichtung kann mit einer Schnittstelle der Vorrichtung derart verbunden sein, dass genau gespeichert wird, zu welchem Zeitpunkt bzw. zu welchem vorbestimmten Zeitintervall während des Schmelzens des Ausgangsmaterials dem Schutzgas eine Kodierungskomponente zugeordnet ist. Auf diese Weise lässt sich präzise feststellen bzw. detektieren, wo die Kodierung im Bauteil angeordnet ist.

Diese Kodierungsinformationen können in vorteilhafter Weise noch mit den Seriennummern des Bauteils verknüpft werden.

Beispielsweise ist es möglich, bei einer ersten Serie von Bauteilen die unterste Schicht bzw. die untersten Schichten unter Zusatz einer Kodierungskomponente herzustellen. Bei einer weiteren Serie von Bauteilen können dann andere Schichten mit der Kodierungskomponente hergestellt werden. Daraus ergibt sich für eine einzige Serie von Bauteilen die Möglichkeit, diese an verschiedenen Stellen zu kodieren.

Durch unterschiedliche Kodierung einer einzelnen Baureihe wird es für Fälscher noch schwieriger, die Kodierung zu fälschen.

Erfindungsgemäß können die verwendeten Isotope Isotope des Schutzgases sein, d.h. dass beispielsweise bei Verwendung von Stickstoff als Schutzgas das Verhältnis von Stickstoff-15 zu Stickstoff-14 Isotopen verändert ist. Beispielsweise kann auch Kohlendioxid, welches Kohlenstoff-12, Kohlenstoff-13 und Kohlenstoff-14 Isotope enthält, vorgesehen sein.

Bei der Herstellung von Bauteilen aus Aluminium können beispielsweise Argon, Sauerstoff-Isotope und Stickstoff-Isotope kombiniert werden.

Bei der Herstellung von Bauteilen aus Edelstahl oder Nickel-basierten Legierungen kann eine Kombination von Kohlenstoff Isotopen in CO₂ und Wasserstoff Isotopen in H₂ verwendet werden.

Inerte Isotope sind prinzipiell Werkstoff unabhängig einsetzbar, da die Einbettung in die Mikroporositäten ein rein mechanischer Vorgang ist.

Es ist aber auch möglich, dem Schutzgas als Kodierungskomponente andere Isotope eines anderen Gases zusammen mit einem Anteil dieses anderen Gases zuzusetzen.

In einem nächsten Schritt lässt sich das fertige dreidimensionale Bauteil mit Hilfe einer Detektionseinrichtung, wie beispielsweise einem Massenspektrometer (Gaschromatograph), analysieren und somit die Kodierung bzw. die Originalität des Bauteils überprüfen. Eine Analyse mittels Magnetresonanz oder auch chemische Analyseverfahren sind möglich.

Gemäß einem weiteren Ausführungsbeispiel des erfindungsgemäßen Verfahrens ist als Kodierungskomponente ein gasförmiges Legierungselement vorgesehen.

Hierbei kann beispielsweise vorgesehen sein, ein Inertgas wie Argon als Prozessgas zu verwenden, welches einen geringen Anteil zwischen 1ppm und 10.000ppm Stickstoff-15 als Kodierungskomponente enthält. In dem metallischen Ausgangsmaterial ist Titanium enthalten. Demgemäß reagiert bei der Herstellung des dreidimensionalen Bauteils ein kleiner Anteil des Titanium mit dem Stickstoff-15 und bildet Titaniumnitrid-15. Dieses ist in seinen chemischen und physikalischen Eigenschaften nicht von Titaniumnitrid-14 zu unterscheiden und daher kann dies nicht mittels chemischer Analyseverfahren detektiert werden. Jedoch ist es möglich, das Bauteil mit einem Massenspektrometer zu analysieren. Dabei wird dann festgestellt, dass das Bauteil unter einer Stickstoff Atmosphäre mit erhöhtem Stickstoff-15-Anteil hergestellt wurde.

Somit es mittels des erfindungsgemäßen Verfahrens möglich, bestimmte Bereiche bzw. Lagen eines dreidimensionalen Bauteils zu kodieren und diese Kodierung anschließend zu detektieren.

### Bezuaszeichenliste:

- 1: Vorrichtung
- 2: Prozesskammer
- 3: Kammerwandung
- 4: Prozessraum
- 5: Bauplattform
- 6: Bauteil
- 7: Vorratsbehälter
- 8: Auftrageinrichtung
- 9: Laser
- 10: Umlenkeinrichtung
- 11: Prozessgaszuführeinrichtung
- 12: Kodierungskomponentezuführeinrichtung
- 13: Behälter

## Patentansprüche

1. Verfahren zum generativen Fertigen und Kodieren eines dreidimensionalen Bauteils umfassend die folgenden Schritte Bereitstellen eines metallischen Ausgangsmaterials Zuführen eines Prozessgases zum Ausgangsmaterial, Schmelzen des Ausgangsmaterials mit einer Wärmequelle, Wiederholen der vorstehenden Schritte, **dadurch gekennzeichnet, dass** zu zumindest einem vorbestimmten Zeitintervall während des Schmelzens dem Ausgangsmaterial eine gasförmige Kodierungskomponente oder ein eine Kodierungskomponente enthaltendes Kodierungsgas derart zugesetzt werden, dass die Verwendung der Kodierungskomponente im fertigen Objekt detektierbar ist, und dass Informationen über die Kodierungskomponente protokolliert werden und die gasförmige Kodierungskomponente ein oder mehrere Isotope zumindest eines Gases umfasst und der Anteil des zumindest einen Isotops gegenüber dem natürlich vorkommenden Anteil dieses Isotops im Gas verändet ist und dass das metallische Ausgangsmaterial mittels Pulverbett oder Pulverzuführung oder Drahtzuführung bereitgestellt wird und die Wärmequelle ein Laserstrahl oder ein Plasma-/Lichtbogen ist.

2. Verfahren nach Anspruch 1, **dadurch gekennzeichnet,**
**dass** das Prozessgas ein inertes Gas, wie Argon, Helium, Neon, Krypton, Xenon oder Radon oder ein Aktivgas, wie O₂, CO₂, H₂, und N₂ oder auch Mischungen daraus umfasst und die Kodierungskomponente Sauerstoff 18 Kohlendioxid (C¹⁸O₂), Kohlenstoff 13 Kohlendioxid (¹³CO₂), Kohlenstoff 13 Kohlenmonoxid (¹³CO) Deuterium (D₂), Stickstoff 15 (¹⁵N₂) und Sauerstoff 18 (¹⁸O₂) oder auch Mischungen daraus umfasst.

3. Verfahren nach Anspruch 1 oder 2, **dadurch gekennzeichnet,**
**dass** die Häufigkeit des Isotops gegenüber der natürlich vorkommenden Häufigkeit um mehr als 0,5% oder um mehr als 1,0% oder um mehr als 1,5% oder um mehr als 2,5% oder um mehr als 5,0% oder um mehr als 10,0% oder um mehr als 25% oder um mehr als 50,0% oder um mehr als 75% oder um mehr als 100% oder um mehr als 150% oder um mehr als 200% oder um mehr als 500% oder um mehr als 1000% erhöht oder verringert ist.

4. Verfahren nach einem der Ansprüche 1 bis 3, **dadurch gekennzeichnet, dass** die Kodierungskomponente mindestens ein Isotop eines Aktivgases enthält, das mit dem Werkstoff des herzustellenden Bauteils derart reagiert, dass es im Bauteil verbleibt und/oder dass die Kodierungskomponente zumindest ein Isotop eines inerten Gases umfasst, wobei sich das Isotop in das Bauteil einlagert.

5. Verfahren nach einem der Ansprüche 1 bis 4, **dadurch gekennzeichnet, dass** die Kodierungskomponente mehrere unterschiedliche Isotope in vorbestimmten Verhältnissen enthält wobei die verschiedenen Isotope im Bauteil die Kodierung ausbilden.

6. Verfahren nach einem der Ansprüche 1 bis 5, **dadurch gekennzeichnet, dass** die Isotope Isotope des Gases sind, das die Hauptkomponente des P rozessgases ausbildet und/oder dass die Isotope verschieden zu den Isotopen des Prozessgases sind.

7. Verfahren nach einem der Ansprüche 1 bis 6, **dadurch gekennzeichnet, dass** die Kodierungskomponente ein gasförmiges Legierungselement umfasst, wobei der Anteil des gasförmigen Legierungselements derart gew±hlt ist, dass das gasförmige Legierungselement die Materialeigenschaften des Bauteils nur unwesentlich verändert.

8. Verfahren nach einem der vorhergehenden Ansprüche **dadurch gekennzeichnet, dass** das Protokollieren von Kodierungsinformationen das Abspeichern von Kodierungsinformationen in einer Datenbank umfasst.

9. Verfahren nach einem der vorhergehenden Ansprüche **dadurch gekennzeichnet, dass** an Hand der Kodierungsinformationen das fertige Objekt hinsichtlich seiner Kodierungskomponente, bspw. mittels chemischer Analyseverfahren oder mittels eines Massenspektrometers, detektiert wird und/oder dass die Kodierungsinformationen Angaben über die Art und/oder den Anteil der Kodierungskomponente und/oder über die Lage der Kodierungskomponente im Objekt und/oder über die Seriennummer des Objekts enthalten.

## Claims

1. Method for generatively producing and coding a three-dimensional component, comprising the following steps
Providing a metallic starting material,
Feeding a process gas to the starting material,
Melting the starting material with a heat source,
Repeating the above steps, **characterized in that** in at least one predetermined time interval during melting, a gaseous coding component or a coding gas containing a coding component is added to the starting material, in such a way that the use of the coding component in the finished object can be detected; and that information about the coding component is recorded and the gaseous coding component comprises one or more isotopes of at least one gas and the proportion of the at least one isotope is modified in comparison with the naturally occurring proportion of this isotope in the gas and that the metallic starting material is provided by means of powder bed or powder feed or wire feed and the heat source is a laser beam or a plasma arc/arc.

2. Method according to claim 1, **characterized in that** the process gas is an inert gas, such as argon, helium, neon, krypton, xenon or radon, or an active gas, such as O₂, the CO₂, H₂ and N₂ or mixtures thereof, and the coding component comprises oxygen 18 carbon dioxide (C¹⁸O₂), carbon 13 carbon dioxide (¹³CO₂), carbon 13 carbon monoxide (¹³CO), deuterium (D₂), nitrogen 15 (¹⁵N₂) and oxygen 18 (¹⁸O₂) or mixtures thereof.

3. Method according to claim 1 or 2, **characterized in that** the frequency of the isotope in comparison with the naturally occurring frequency is increased or decreased by more than 0.5 % or by more than 1.0 % or by more than 1.5 % or by more than 2.5 % or by more than 5.0 % or by more than 10.0 % or by more than 25 % or by more than 50.0 % or by more than 75 % or by more than 100 % or by more than 150 % or by more than 200 % or by more than 500 % or by more than 1000 %.

4. Method according to any one of claims 1 to 3, **characterized in that** the coding component contains at least one isotope of an active gas which reacts with the material of the component to be produced in such a way that it remains in the component and/or that the coding component comprises at least one isotope of an inert gas, wherein the isotope is embedded in the component.

5. Method according to any one of claims 1 to 4, **characterized in that** the coding component comprises a plurality of different isotopes in predetermined ratios, wherein the different isotopes in the component form the coding.

6. Method according to any one of claims 1 to 5, **characterized in that** the isotopes are isotopes of the gas which forms the main component of the process gas and/or that the isotopes are different from the isotopes of the process gas.

7. Method according to any one of claims 1 to 6, **characterized in that** the coding component comprises a gaseous alloy element, wherein the proportion of the gaseous alloy element is selected in such a way that the gaseous alloy element changes the material properties of the component only insignificantly.

8. Method according to any one of the preceding claims, **characterized in that** the recording of coding information comprises storing coding information in a database.

9. Method according to any one of the preceding claims, **characterized in that** the coding information is used to detect the finished object with regard to its coding component, for example by means of chemical analysis methods or by means of a mass spectrometer, and/or that the coding information contains information about the type and/or the proportion of the coding component and/or about the position of the coding component in the object and/or about the serial number of the object.

## Revendications

1. Procédé notamment d'impression 3D et codage d'un élément structural tridimensionnel, comprenant les étapes suivantes
mise à disposition d'un matériau de départ métallique,
alimentation d'un gaz de processus jusqu'au matériau de départ,
fusion du matériau de départ avec une source de chaleur,
répétition des étapes précédentes, **caractérisé en ce que** pendant au moins un intervalle de temps prédéfini durant la fusion, un constituant de codage gazeux ou un gaz de codage contenant un constituant de codage est ajouté au matériau de départ, de manière à permettre la détection de l'utilisation du constituant de codage dans l'objet fini ; et **en ce que** des informations sur le constituant de codage sont consignées et le constituant de codage gazeux comprend un ou plusieurs isotopes d'au moins un gaz et la proportion de l'au moins un isotope est modifiée par rapport à la proportion de cet isotope présente naturellement dans le gaz et **en ce que** le matériau de départ métallique est mis à disposition au moyen d'un lit pulvérulent ou d'une alimentation en poudre ou d'une alimentation de fil et que la source de chaleur est un rayonnement laser ou un arc électrique/de plasma.

2. Procédé selon la revendication 1, **caractérisé en ce que** le gaz de processus comprend un gaz inerte, tel que l'argon, l'hélium, le néon, le krypton, le xénon ou le radon ou un gaz actif, tel que O₂, CO₂, H₂, et N₂ ou encore des mélanges de ceux-ci et le constituant de codage comprend du dioxyde de carbone d'oxygène 18 (C¹⁸O₂), du dioxyde de carbone de carbone 13 (¹³CO₂), du monoxyde de carbone de carbone 13 (¹³CO), du deutérium (D₂), de l'azote 15 (¹⁵N₂) et de l'oxygène 18 (¹⁸O₂) ou encore des mélanges de ceux-ci.

3. Procédé selon la revendication 1 ou 2, **caractérisé en ce que** la fréquence de l'isotope, par rapport à la fréquence présente naturellement, est augmentée ou diminuée de plus de 0,5 % ou de plus de 1,0 % ou de plus de 1,5 % ou de plus de 2,5 % ou de plus de 5,0 % ou de plus de 10,0 % ou de plus de 25 % ou de plus de 50,0 % ou de plus de 75 % ou de plus de 100 % ou de plus de 150 % ou de plus de 200 % ou de plus de 500 % ou de plus de 1000 %.

4. Procédé selon l'une quelconque des revendications 1 à 3, **caractérisé en ce que** le constituant de codage contient au moins un isotope d'un gaz actif, qui réagit avec le matériau de l'élément structural à fabriquer de manière à rester dans l'élément structural et/ou **en ce que** le constituant de codage comprend au moins un isotope d'un gaz inerte, l'isotope s'insérant dans l'élément structural.

5. Procédé selon l'une quelconque des revendications 1 à 4, **caractérisé en ce que** le constituant de codage contient plusieurs isotopes différents dans des rapports prédéfinis, les différents isotopes présents dans l'élément structural formant le codage.

6. Procédé selon l'une quelconque des revendications 1 à 5, **caractérisé en ce que** les isotopes sont des isotopes du gaz qui forme le constituant principal du gaz de processus et/ou **en ce que** les isotopes sont différents des isotopes du gaz de processus.

7. Procédé selon l'une quelconque des revendications 1 à 6, **caractérisé en ce que** le constituant de codage comprend un élément d'alliage gazeux, la proportion de l'élément d'alliage gazeux étant choisie de telle sorte que l'élément d'alliage gazeux ne modifie les propriétés des matériaux de l'élément structural que de manière négligeable.

8. Procédé selon l'une quelconque des revendications précédentes, **caractérisé en ce que** la consignation des informations de codage comprend l'enregistrement des informations de codage dans une base de données.

9. Procédé selon l'une quelconque des revendications précédentes, **caractérisé en ce que**, à l'aide des informations de codage, l'objet fini est détecté en ce qui concerne son constituant de codage, par exemple au moyen d'un procédé d'analyse chimique ou au moyen d'un spectromètre de masse, et/ou **en ce que** les informations de codage contiennent des indications sur le type et/ou la proportion du constituant de codage et/ou sur la position du constituant de codage dans l'objet et/ou sur le numéro de série de l'objet.
